# FASCICULE DE BREVET EUROPEEN

(11) **EP 3 587 461 B1**
(45) Date de publication et mention de la délivrance du brevet: **16.12.2020**
(21) Numéro de dépôt: 19182312.9
(22) Date de dépôt: 25.06.2019
(51) Int. Cl.: C08F 265/06, C08K 3/36, C09D 4/06, C08K 9/06, H01B 3/44

(54) **UTILISATION D'UNE COMPOSITION (MÉTH)ACRYLIQUE POUR LA FABRICATION D'UN MATÉRIAU DIÉLECTRIQUE**
ANWENDUNG EINER (METH)ACRYL-ZUSAMMENSETZUNG FÜR DIE HERSTELLUNG EINES DIELEKTRISCHEN MATERIALS
USE OF A (METH)ACRYLIC COMPOSITION FOR THE PRODUCTION OF A DIELECTRIC MATERIAL

(30) Priorité: 28.06.2018 FR 1855886
(43) Date de publication de la demande: 01.01.2020
(73) Titulaire: Schneider Electric Industries SAS, 92500 Rueil Malmaison (FR)
(72) Inventeur: HASSANZADEH, Mehrdad, 38050 GRENOBLE Cedex 9 (FR); OHL, Brigitte, 38050 GRENOBLE Cedex 9 (FR); AULAGNER, Emmanuel, 38050 GRENOBLE Cedex 9 (FR); MAUGER, Muriel, 38050 GRENOBLE Cedex 9 (FR)
(74) Mandataire: Brevalex

(56) Documents cités:
- EP-A1- 3 296 340
- EP-A1- 3 312 226
- JP-A- 2011 173 969
- US-A1- 2014 243 493

## Description

### DOMAINE TECHNIQUE

La présente invention se rapporte à une utilisation d'une composition thermoplastique particulière, en l'espèce une composition (méth)acrylique, pour la fabrication d'un matériau diélectrique, ce matériau diélectrique étant doté de propriétés mécaniques et diélectriques particulièrement performantes.

Il est précisé que, par l'expression "matériau diélectrique", on entend, dans la suite de la présente demande de brevet, un matériau qui présente une valeur de permittivité relative, mesurée à 25 °C et conformément à la norme CEI 62631-2-1:2018, strictement supérieure à 5.

Un tel matériau diélectrique peut être utilisé dans l'industrie électrique, qu'elle soit de basse, moyenne ou haute tension, ou encore dans l'industrie électronique.

### ÉTAT DE LA TECHNIQUE ANTÉRIEURE

Dans le domaine de l'industrie électrique et électronique, les matériaux électriquement isolants, plus couramment appelés matériaux diélectriques, sont classiquement obtenus à partir de résines durcissables qui, après polymérisation, forment un réseau tridimensionnel, stable et infusible.

Parmi les résines durcissables, les résines dites "résines époxydes" sont largement utilisées, car elles permettent d'obtenir des matériaux durcis présentant simultanément de bonnes propriétés mécaniques et diélectriques.

Les résines époxydes sont obtenues à partir de compositions qui comprennent au moins un précurseur, ou pré-polymère, de cette résine époxyde et un agent de réticulation, également appelé durcisseur ([2] et [3]).

Parmi les agents de réticulation susceptibles d'être mis en œuvre, les anhydrides d'acides sont, de loin, les agents de réticulation les plus employés à ce jour pour l'obtention de matériaux durcis destinés à l'industrie électrique ou électronique.

Or, la mise en œuvre d'anhydrides d'acides pour l'obtention de matériaux durcis à partir de résines durcissables, notamment de résines époxydes, est suivie de près par l'Agence Européenne des Produits Chimiques ECHA. En effet, certains anhydrides d'acides, tels que l'anhydride hexahydrophtalique (HHPA) et l'anhydride méthylhexahydrophtalique (MHHPA), font d'ores et déjà partie des substances qualifiées de substances extrêmement préoccupantes (en anglais, Substances of Very High Concern et abrégé SVHC) et d'une liste de substances dites "candidates". Ces anhydrides HHPA et MHHPA vont être prochainement incorporés à l'Annexe XIV du règlement REACH et, par conséquent, être soumis à une procédure d'autorisation pour pouvoir être utilisés. D'autres anhydrides d'acides, notamment l'anhydride méthyltétrahydrophtalique (MTHPA), risquent de prochainement intégrer cette liste de substances dites "candidates" puis, à moyen terme, l'Annexe XIV.

Même si le calendrier concernant leur inscription sur la liste des substances dites "candidates" est différent, ces anhydrides d'acides HHPA, MHHPA et MTHPA, connus comme sensibilisants respiratoires, présentent des niveaux de danger similaires.

Il existe donc un besoin clairement exprimé de trouver une alternative aux compositions de résines durcissables qui mettent en œuvre des anhydrides d'acides comme agents de réticulation, cette alternative permettant de répondre aux prescriptions de ce règlement REACH.

Au demeurant, comme indiqué précédemment, après polymérisation, les résines durcissables forment un réseau, certes tridimensionnel et stable, mais dont la forme ne peut plus être façonnée, par exemple par thermoformage. De surcroît, le recyclage des pièces fabriquées en ces matériaux durcis est difficilement envisageable.

Par ailleurs, les procédés de fabrication de matériaux durcis à partir de compositions de résines durcissables recourent, après l'étape de polymérisation proprement dite, à une étape complémentaire de post-cuisson, classiquement réalisée à une température de l'ordre de 120 °C. La mise en œuvre d'une telle étape complémentaire a, bien entendu, une incidence non seulement sur les temps de cycles de fabrication de ces matériaux durcis mais également sur le bilan énergétique global du procédé de fabrication associé.

Le but de l'invention est donc de proposer une composition qui permette d'être utilisée pour la fabrication d'un matériau diélectrique qui puisse être thermoformé, qui puisse être ultérieurement recyclé et qui soit doté de propriétés mécaniques et diélectriques pour le moins comparables à celles des matériaux diélectriques obtenus à partir de résines durcissables, en particulier à partir de résines époxydes. Ce matériau diélectrique doit, en particulier, conserver ces propriétés mécaniques et diélectriques dans le temps et à des températures d'utilisation de ce matériau diélectrique pouvant aller jusqu'à 90 °C.

Cette composition doit en outre pouvoir être utilisée dans un procédé de fabrication d'un tel matériau diélectrique, ce procédé pouvant être facilement mis en œuvre dans les équipements et outillages des installations industrielles actuellement utilisées pour la fabrication des matériaux durcis à partir de résines époxydes.

Ce procédé de fabrication doit, en outre, permettre d'obtenir ce matériau diélectrique en un nombre d'étapes qui soit le plus limité possible et, notamment, en l'absence d'étape complémentaire de post-cuisson, consommatrice de temps et d'énergie.

De manière plus générale, le procédé de fabrication doit être le plus direct possible et permettre une mise en œuvre industrielle qui soit techniquement et économiquement optimisée et ce, dans des conditions de sécurité humaine et de sécurité environnementale plus favorables que celles des procédés de fabrication de matériaux durcis à partir de compositions de résines durcissables.

### EXPOSÉ DE L'INVENTION

Ces buts ainsi que d'autres encore sont atteints par une utilisation d'une composition particulière pour la fabrication d'un matériau diélectrique.

Selon l'invention, cette composition particulière n'est pas une composition durcissable mais une composition (méth)acrylique qui comprend :
(a) 100 parties en poids d'un sirop (méth)acrylique liquide comprenant :
   (a₁) de 10 % en poids à 50 % en poids d'un ou plusieurs polymères (méth)acryliques P1, et
   (a₂) de 50 % en poids à 90 % en poids d'un ou plusieurs monomères (méth)acryliques M1, chaque monomère M1 ne comprenant qu'une fonction (méth)acrylique par monomère,
(b) de 100 parties en poids à 200 parties en poids d'une charge inorganique C, cette charge inorganique C comprenant au moins une charge C1 choisie parmi les oxydes métalliques, les carbonates, les silicates et le verre,
(c) de 0,01 partie en poids à 5 parties en poids d'un monomère (méth)acrylique M2, le monomère M2 comprenant au moins deux fonctions (méth)acryliques par monomère,
(d) de 0,01 partie en poids à 5 parties en poids d'un monomère (méth)acrylique M3, le monomère M3 étant :
   - soit un monomère (méth)acrylique M3₁ ne comprenant qu'une fonction (méth)acrylique par monomère, le monomère M3₁ étant différent du ou des monomères M1,
   - soit un monomère (méth)acrylique M3₂ comprenant au moins deux fonctions (méth)acryliques par monomère, le monomère M3₂ étant différent du monomère M2,
(e) de 0,01 partie en poids à 5 parties en poids d'un initiateur de polymérisation choisi parmi les peroxydes organiques, et
(f) optionnellement, un agent du couplage.

Comme on le verra dans les exemples ci-après, le matériau diélectrique obtenu, ou fabriqué, à partir de la composition (méth)acrylique dont l'utilisation fait l'objet de la présente invention présente des propriétés mécaniques, notamment évaluées par des essais de traction et de ténacité, ainsi que des propriétés diélectriques, évaluées par la mesure de la permittivité relative, du facteur de dissipation et de la rigidité diélectrique, qui sont comparables, voire supérieures, à celles des matériaux durcis à base de résines époxydes disponibles à ce jour.

Par ailleurs, étant obtenu à partir d'une composition dont les composés ne présentent pas de risques sanitaires et environnementaux avérés, ce matériau diélectrique permet de répondre de manière bien plus satisfaisante aux prescriptions du règlement REACH que les matériaux durcis mentionnés ci-dessus.

De surcroît, le matériau diélectrique étant obtenu à partir d'une composition à matrice thermoplastique, il est recyclable.

La composition dont l'utilisation fait l'objet de la présente invention et à partir de laquelle le matériau diélectrique est obtenu est une composition (méth)acrylique comprenant, dans des proportions pondérales spécifiques, un sirop (méth)acrylique liquide, une charge inorganique C, des monomères (méth)acryliques M2 et M3 ainsi qu'un initiateur de polymérisation.

Plus particulièrement, le sirop (méth)acrylique liquide comprend :
(a₁) de 10 % en poids à 50 % en poids d'un ou plusieurs polymères (méth)acryliques P1, et
(a₂) de 50 % en poids à 90 % en poids d'un ou plusieurs monomères (méth)acryliques M1.

L'expression "monomère (méth)acrylique" couvre aussi bien un monomère acrylique qu'un monomère méthacrylique. De la même manière, l'expression "polymère (méth)acrylique" couvre aussi bien un homopolymère acrylique, un homopolymère méthacrylique, un copolymère acrylique et qu'un copolymère méthacrylique.

Il est, par ailleurs, précisé que l'expression "de... à..." qui vient d'être citée et qui est utilisée dans la présente demande doit être comprise comme définissant non seulement les valeurs de l'intervalle, mais également les valeurs des bornes de cet intervalle.

Le sirop (méth)acrylique liquide de la composition (méth)acrylique à partir de laquelle est obtenu le matériau diélectrique peut ne comprendre qu'un polymère (méth)acrylique P1 mais peut tout aussi bien comprendre un mélange de deux, trois, voire plus, polymères (méth)acryliques P1.

Le ou chaque polymère (méth)acrylique P1 compris dans le sirop (méth)acrylique liquide peut, en particulier, être choisi parmi :
- les polyacrylates d'alkyle qui comprennent les homopolymères d'acrylate d'alkyle et les copolymères d'acrylate d'alkyle, et
- les polyméthacrylates d'alkyle qui comprennent les homopolymères de méthacrylate d'alkyle et les copolymères de méthacrylate d'alkyle.

Selon un mode de réalisation préféré, le ou chaque polymère (méth)acrylique P1 est un polyméthacrylate de méthyle (PMMA), étant entendu que, comme indiqué ci-dessus, le polyméthacrylate de méthyle (PMMA) peut désigner un homopolymère de méthacrylate de méthyle (MMA) ou bien un copolymère de MMA.

En particulier, dans le cas où le sirop (méth)acrylique liquide comprend un mélange de deux, ou plus, polyméthacrylates de méthyle P1, ce mélange peut être formé par un mélange d'au moins deux homopolymères de MMA ayant un poids moléculaire différent, par un mélange d'au moins deux copolymères de MMA ayant une composition en monomères identique et un poids moléculaire différent, par un mélange d'au moins deux copolymères de MMA ayant une composition en monomères différente ou encore par un mélange d'au moins un homopolymère de MMA et d'au moins un copolymère de MMA.

Selon un mode de réalisation de l'invention, le méthacrylate de méthyle représente au moins 50 % en poids du ou de chaque polymère (méth)acrylique P1.

Selon un mode de réalisation particulier, le ou chaque polymère (méth)acrylique P1 comprend au moins 70%, avantageusement au moins 80%, préférentiellement au moins 90 %, et plus préférentiellement au moins 95 %, en poids de méthacrylate de méthyle.

Lorsque le ou chaque polymère (méth)acrylique P1 est un copolymère de méthacrylate de méthyle (MMA), il peut comprendre au moins un comonomère contenant au moins une insaturation éthylénique et étant apte à copolymériser avec le méthacrylate de méthyle. Parmi ces comonomères, on peut notamment citer les acides acrylique et méthacrylique et les (méth)acrylates d'alkyle dans lesquels le groupe alkyle contient de 1 à 12 atomes de carbone. À titre d'exemples de comonomères, on peut mentionner l'acrylate de méthyle et le (méth)acrylate d'éthyle, de butyle ou de 2-éthylhexyle.

De manière avantageuse, le ou chaque polymère (méth)acrylique P1 est un copolymère de méthacrylate de méthyle et d'acrylate d'alkyle dans lequel le groupe alkyle contient de 1 à 12 atomes de carbone, avantageusement de 1 à 6 atomes de carbone et, préférentiellement, de 1 à 4 atomes de carbone.

Selon un mode de réalisation préféré, lorsque le ou chaque polymère (méth)acrylique P1 est un copolymère de méthacrylate de méthyle (MMA), ce copolymère de méthacrylate de méthyle (MMA) comprend de 70 % à 99,9 %, avantageusement de 80 % à 99,8 %, préférentiellement de 90 % à 99,8 %, et plus préférentiellement de 90 % à 99,7 %, en poids de méthacrylate de méthyle et de 0,1 % à 30 %, avantageusement de 0,2 % à 20 %, préférentiellement de 0,2 % à 10 %, et plus préférentiellement de 0,3 % à 10 %, en poids d'au moins un comonomère contenant au moins une insaturation éthylénique qui peut copolymériser avec le méthacrylate de méthyle. De préférence, le ou chaque comonomère est choisi parmi l'acrylate de méthyle et l'acrylate d'éthyle.

Dans une variante avantageuse, le polymère (méth)acrylique P1 est un copolymère de méthacrylate de méthyle et d'acrylate d'alkyle.

Dans une variante préférée, le polymère (méth)acrylique P1 est un copolymère de méthacrylate de méthyle et d'acrylate de méthyle.

Le poids moléculaire moyen en poids, noté M_{w}, du ou de chaque polymère (méth)acrylique P1 est généralement élevé et peut, dès lors, être supérieur à 40000 g/mol, avantageusement supérieur à 50000 g/mol et, préférentiellement, supérieur à 60000 g/mol. Le poids moléculaire moyen en poids peut être mesuré par chromatographie d'exclusion stérique (SEC).

Le ou chaque polymère (méth)acrylique P1 possède avantageusement un indice de fluidité à chaud en masse (MFR) selon l'ISO 1133-2:2011 (230 °C/3,8 kg) entre 0,1 g/10 min et 20 g/10 min. De préférence, l'indice de fluidité à chaud en masse est compris entre 0,2 g/10 min et 18 g/10 min, plus préférablement entre 0,3 g/10 min et 16 g/10 min, avantageusement entre 0,4 g/10 min et 13 g/10 min.

Le sirop (méth)acrylique liquide de la composition (méth)acrylique peut ne comprendre qu'un monomère (méth)acrylique M1 mais peut tout aussi bien comprendre un mélange de deux, trois, voire plus, monomères (méth)acryliques M1.

Que le sirop (méth)acrylique liquide comprenne un ou plusieurs monomères (méth)acryliques M1, le ou chaque monomère (méth)acrylique M1 ne comprend qu'une fonction (méth)acrylique par monomère.

Le ou chaque monomère (méth)acrylique M1 peut, en particulier, être choisi parmi les monomères acryliques et les monomères méthacryliques, notamment parmi les diméthacrylates et les diacrylates qui sont cités au paragraphe [0032] du document US 2006/0251906 A1, référencé [1] dans la suite de la présente description.

Avantageusement, le ou chaque monomère (méth)acrylique M1 est choisi parmi l'acide acrylique, l'acide méthacrylique, les monomères acryliques d'alkyle, les monomères méthacryliques d'alkyle, le groupe alkyle de ces monomères (méth)acryliques pouvant être linéaire, ramifié ou cyclique, et contenant de 1 à 22, avantageusement de 1 à 12 et, préférentiellement, de 1 à 6 atomes de carbone.

De préférence, le ou chaque monomère (méth)acrylique M1 est choisi parmi l'acide acrylique, l'acide méthacrylique, le méthacrylate de méthyle, le méthacrylate d'éthyle, l'acrylate de méthyle, l'acrylate d'éthyle, l'acrylate de *n*-butyle, l'acrylate d'iso-butyle, l'acrylate de cyclohexyle, le méthacrylate de cyclohexyle, l'acrylate d'iso-bornyle, le méthacrylate d'iso-bornyle, le méthacrylate d'heptyle, l'acrylate de *n-*octyle, l'acrylate de 2-octyle, l'acrylate d'iso-octyle, le méthacrylate de 2-éthylhexyle, le méthacrylate de butyldiglycol, le méthacrylate de dicyclopentényloxyéthyle, le méthacrylate d'éthoxyéthyle, le méthacrylate d'iso-butyle, le méthacrylate de *n*-butyle, le méthacrylate de *tert*-butyle et le méthacrylate d'hydroxypropyle.

Dans une variante avantageuse, le monomère (méth)acrylique M1 est le méthacrylate de méthyle.

Ainsi, lorsque le sirop (méth)acrylique comprend un monomère (méth)acrylique M1, ce monomère M1 est le méthacrylate de méthyle. Lorsque le sirop (méth)acrylique comprend deux, ou plus de deux, monomères (méth)acrylique M1, le méthacrylate de méthyle est, parmi les monomères (méth)acryliques M1, le monomère (méth)acrylique M1 dont la proportion pondérale est majoritaire.

Selon un mode de réalisation de l'invention, le méthacrylate de méthyle représente au moins 50 % en poids, avantageusement au moins 60 % en poids, plus avantageusement au moins 70 % en poids, préférentiellement au moins 80 % en poids, et plus préférentiellement au moins 90 % en poids, des monomères (méth)acryliques M1.

Dans une variante de l'invention, le sirop (méth)acrylique liquide comprend :
(a₁) de 15% en poids à 40% en poids et, préférentiellement, de 18% en poids à 30% en poids du ou des polymères (méth)acryliques P1, et
(a₂) de 60% en poids à 85% en poids et, préférentiellement, de 70% en poids à 82% en poids du ou des monomères (méth)acryliques M1.

Dans une variante avantageuse, le ou chaque polymère (méth)acrylique P1 et le ou chaque monomère (méth)acrylique M1 du sirop (méth)acrylique liquide comprennent au moins un même motif (méth)acrylique, une telle variante permettant d'optimiser la solubilité du ou des polymères (méth)acryliques P1 dans le ou les monomères (méth)acryliques M1.

Préférentiellement, le ou chaque polymère (méth)acrylique P1 est choisi parmi un copolymère de méthacrylate de méthyle et d'acrylate de méthyle et un copolymère de méthacrylate de méthyle et d'acrylate d'éthyle.

Préférentiellement, le monomère (méth)acrylique M1 est le méthacrylate de méthyle.

Dans une variante avantageuse, le sirop (méth)acrylique liquide comprend un polymère (méth)acrylique P1, et non un mélange de polymères (méth)acryliques P1.

Dans une variante avantageuse, le sirop (méth)acrylique liquide comprend un monomère (méth)acrylique M1, et non un mélange de monomères (méth)acryliques M1.

Plus préférentiellement, le sirop (méth)acrylique liquide de la composition (méth)acrylique comprend :
(a₁) un copolymère de méthacrylate de méthyle et d'acrylate de méthyle ou un copolymère de méthacrylate de méthyle et d'acrylate d'éthyle comme polymère (méth)acrylique P1, et
(a₂) du méthacrylate de méthyle comme monomère (méth)acrylique M1.

Dans une variante avantageuse, le sirop (méth)acrylique liquide présente une viscosité dynamique, à 25 °C, comprise entre 10 mPa.s et 10000 mPa.s. Dans une telle variante, le sirop (méth)acrylique liquide n'est pas trop réactif et présente une durée d'utilisation après mélange (en anglais "pot life") d'au moins 5 min, de préférence d'au moins 10 min, pour sa transformation ultérieure, notamment pour son transfert en vue d'une transformation par moulage par injection.

Dans une variante plus avantageuse, le sirop (méth)acrylique liquide présente une viscosité dynamique, à 25 °C, comprise entre 20 mPa.s et 7000 mPa.s et, de préférence, entre 20 mPa.s et 5000 mPa.s.

Le sirop (méth)acrylique liquide peut, en outre, comprendre, des oligomères à fonctionnalité (méth)acrylate et/ou des stabilisants.

Les oligomères à fonctionnalité (méth)acrylate peuvent notamment être des époxy-(méth)acrylates, des uréthane-(méth)acrylates ou encore des polyester-(méth)acrylates.

Ces oligomères peuvent être présents, dans le sirop (méth)acrylique liquide, à hauteur d'au plus 5 parties en poids, avantageusement d'au plus 3 parties en poids et, préférentiellement, d'au plus 1 partie en poids, pour 100 parties en poids du ou des polymères (méth)acryliques P1 et du ou des monomères (méth)acryliques P1.

Des stabilisants, ou inhibiteurs de réaction, peuvent également être présents dans le sirop (méth)acrylique liquide pour empêcher une polymérisation spontanée du ou des monomères (méth)acryliques M1.

Ces stabilisants peuvent notamment être choisis parmi l'hydroquinone (HQ), l'hydroquinone de monométhyléther (MEHQ.), le 2,6-di-*tert*-butyl-4-méthylphénol (BHT), le 2,6-di-*tert*-butyl-4-méthoxyphénol (Topanol O) et le 2,4-diméthyl-6-*tert-*butylphénol (Topanol A).

Ces stabilisants peuvent être présents, dans le sirop (méth)acrylique liquide, à hauteur d'au plus 5 parties en poids, avantageusement d'au plus 4 parties en poids et, préférentiellement, en une proportion comprise entre 0,3 et 3 parties en poids, pour 100 parties en poids du ou des polymères (méth)acryliques P1 et du ou des monomères (méth)acryliques M1.

La composition (méth)acrylique dont l'utilisation fait l'objet de la présente invention comprend, en outre, une charge inorganique C.

Cette charge inorganique C comprend au moins une charge C1 qui est choisie parmi les oxydes métalliques, les carbonates, les silicates et le verre.

Selon un mode de réalisation particulier, la charge C1 se présente sous la forme de poudre.

Une telle poudre peut, par exemple, être formée de particules dont au moins 50% en nombre possèdent une taille moyenne de particules, notée D₅₀, inférieure ou égale à 50 µm, avantageusement inférieure ou égale à 20 µm et, préférentiellement, inférieure ou égale à 5 µm.

Lorsque la charge C1 est choisie parmi les carbonates, ce ou ces carbonates peuvent être choisis parmi le carbonate de calcium (craie), le carbonate de magnésium, le carbonate de sodium et le carbonate de potassium.

Lorsque la charge C1 est choisie parmi les silicates, ce ou ces silicates peuvent être choisis parmi le silicate de calcium, le silicate de sodium, le silicate de potassium et le silicate de magnésium.

Dans une variante avantageuse, la charge C1 est choisie parmi les oxydes métalliques. Ce ou ces oxydes métalliques peuvent être choisis parmi l'alumine Al₂O₃, qui peut être hydratée ou non, l'oxyde de baryum BaO, la silice SiO₂, l'oxyde de magnésium MgO et l'oxyde de calcium CaO.

Selon un mode de réalisation préféré, l'oxyde métallique est la silice SiO₂. Cette silice peut notamment être une silice cristalline broyée ou une silice amorphe.

Dans une variante de l'invention, la charge inorganique C peut également comprendre, en outre, du trihydrate d'aluminium Al(OH)₃, noté C2, et/ou des renforts, notés C3.

La présence de trihydrate d'aluminium C2 permet, en particulier, d'améliorer la tenue au cheminement du matériau diélectrique.

Selon un mode de réalisation particulier, le trihydrate d'aluminium C2 se présente sous la forme de particules dont au moins 50% en nombre possèdent une taille moyenne de particules, notée D₅₀, inférieure ou égale à 50 µm, avantageusement inférieure ou égale à 20 µm et, préférentiellement, inférieure ou égale à 5 µm.

Les renforts C3 peuvent notamment se présenter sous la forme de tissus, de fibres ou de billes. Ces fibres peuvent être naturelles ou synthétiques, courtes ou longues.

Dans une variante avantageuse de l'invention, les renforts C3 peuvent être choisis parmi les tissus de verre, les fibres de verre et les billes de verre.

Selon un mode de réalisation particulier, la composition (méth)acrylique dont l'utilisation fait l'objet de l'invention comprend de 120 parties en poids à 180 parties en poids et, avantageusement, de 140 parties en poids à 170 parties en poids, de charge inorganique C.

La composition (méth)acrylique dont l'utilisation fait l'objet de la présente invention comprend, en outre, un monomère (méth)acrylique M2, un monomère (méth)acrylique M3 ainsi qu'un initiateur de polymérisation.

Le monomère (méth)acrylique M2, qui peut copolymériser avec le ou les monomères (méth)acryliques M1, est un composé qui comprend au moins deux fonctions (méth)acryliques par monomère.

Lorsqu'il comprend deux fonctions (méth)acryliques par monomère, ce monomère (méth)acrylique M2 peut être choisi parmi les diméthacrylates et les diacrylates qui sont cités au paragraphe [0033] du document **[1]**.

Lorsqu'il comprend trois fonctions (méth)acryliques par monomère, ce monomère (méth)acrylique M2 peut être choisi parmi les triméthacrylates et les triacrylates qui sont cités au paragraphe [0034] du document **[1]**.

Lorsqu'il comprend quatre, ou plus de quatre, fonctions (méth)acryliques par monomère, ce monomère (méth)acrylique M2 peut être choisi parmi les tétraacrylates et les pentaacrylates qui sont cités au paragraphe [0035] du document **[1]**.

Dans une variante avantageuse de l'invention, le monomère (méth)acrylique M2 est choisi parmi le diméthacrylate d'éthylène glycol, le diméthacrylate de néopentylglycol, le diacrylate néopentylglycol, le diméthacrylate de 1,4-butanediol, le diacrylate de 1,4-butanediol, le diméthacrylate de 1,3-butylène glycol, le diacrylate de 1,3-butylène glycol, le diméthacrylate de triéthylène glycol et le diacrylate de triéthylène glycol.

La composition (méth)acrylique comprend de 0,01 partie en poids à 5 parties en poids de monomère (méth)acrylique M2.

Selon un mode de réalisation particulier, la composition (méth)acrylique comprend de 0,1 partie en poids à 4 parties en poids, avantageusement de 0,5 partie en poids à 3 parties en poids, de monomère (méth)acrylique M2.

La composition (méth)acrylique dont l'utilisation fait l'objet de la présente invention comprend également un monomère (méth)acrylique M3, ce monomère (méth)acrylique M3 étant distinct du ou des monomères (méth)acryliques M1 et du monomère (méth)acrylique M2 qui sont présents dans la composition (méth)acrylique.

Selon une première variante, ce monomère (méth)acrylique M3, alors noté M3₁ est un monomère (méth)acrylique qui ne comprend qu'une fonction (méth)acrylique par monomère. Le monomère (méth)acrylique M3₁ peut notamment être choisi parmi les méthacrylates et acrylates qui ont été cités ci-avant pour le ou les monomères (méth)acryliques M1, à la condition que le monomère (méth)acrylique M3₁ soit un monomère (méth)acrylique différent du ou des monomères (méth)acryliques M1 présents dans le sirop (méth)acrylique liquide.

Avantageusement, le monomère (méth)acrylique M3₁ est choisi parmi les monomères (méth)acryliques d'alkyle dans lesquels le groupe alkyle comprend au moins 6 atomes de carbone, ce groupe alkyle pouvant être linéaire, ramifié ou cyclique, mais étant préférentiellement ramifié ou cyclique.

De préférence, le monomère (méth)acrylique M3₁ est choisi parmi l'acrylate de cyclohexyle, le méthacrylate de cyclohexyle, l'acrylate d'iso-bornyle, le méthacrylate d'iso-bornyle, l'acrylate de *tert*-butylcyclohexyle, l'acrylate de 4-(1,1-diméthyéthyl)cyclohexyle et l'acrylate de 3,3,5 triméthylcyclohexyle.

Selon une seconde variante, ce monomère (méth)acrylique M3, alors noté M3₂ est un monomère (méth)acrylique qui comprend au moins deux fonctions (méth)acryliques par monomère. Le monomère (méth)acrylique M3₂ peut notamment être choisi parmi les diméthacrylates et diacrylates qui ont été cités ci-avant pour le monomère (méth)acrylique M2, à la condition que le monomère (méth)acrylique M3₂ soit un monomère (méth)acrylique différent du monomère (méth)acrylique M2 présent dans le sirop (méth)acrylique liquide.

Avantageusement, le monomère (méth)acrylique M3₂ est choisi parmi les monomères (méth)acryliques qui ont été cités pour le monomère (méth)acrylique M2 et notamment ceux qui sont cités dans les paragraphes [0033] à [0035] du document **[1]**.

De préférence, le monomère (méth)acrylique M3₂ est choisi parmi le diméthacrylate de triéthylène glycol, le diméthacrylate de néopentylglycol, le diacrylate néopentylglycol, le diméthacrylate de 1,4-butanediol, le diacrylate de 1,4-butanediol, le diméthacrylate de 1,3-butylène glycol, le diacrylate de 1,3-butylène glycol, le diméthacrylate de triéthylène glycol et le diacrylate de triéthylène glycol.

La composition (méth)acrylique dont l'utilisation fait l'objet de la présente invention comprend de 0,01 partie en poids à 10 parties en poids de monomère (méth)acrylique M3.

Selon un mode de réalisation particulier, la composition (méth)acrylique comprend de 0,1 partie en poids à 5 parties en poids de monomère (méth)acrylique M3.

La composition (méth)acrylique dont l'utilisation fait l'objet de la présente invention comprend, en outre, un initiateur de polymérisation dont la fonction est d'assurer le démarrage de la polymérisation des monomères (méth)acryliques M1, M2 et M3 (M3₁ ou M3₂) de démarrer.

L'initiateur de polymérisation est choisi parmi les peroxydes organiques et, de manière avantageuse, parmi les peroxydes organiques qui sont liquides au moins dans la plage de températures allant de 0 °C à 50 °C.

L'initiateur de polymérisation peut, en particulier, comprendre de 2 à 30 atomes de carbone et être, par exemple, choisi parmi le peroxynéodécanoate de *tert-*amyle, le peroxydicarbonate de di(*sec*-butyle), le peroxydicarbonate de diisopropyle, le peroxynéodécanoate de *tert*-butyle, le peroxydicarbonate de di(2-éthylhexyle), le peroxypivalate de *tert*-amyle, le peroxypivalate de *tert*-butyle, le peroxyde de di(3,5,5-triméthylhexanoyle), le 2,5-diméthyl-2,5-di(2-éthylhexanoylperoxy)hexane, le peroxy-2-éthylhexanoate de 1,1,3,3 tétraméthylbutyle, le peroxy-2-éthylhexanoate de *tert*-amyle, le peroxy-2-éthylhexanoate de *tert*-butyle, le peroxydiéthylacétate de *tert*-butyle, le peroxyisobutyrate de *tert*-butyle, le *tert*-amylperoxy-1-méthoxycyclohexane, le 1,1-di(*tert*-amylperoxy)cyclohexane, le 1,1-di(*tert*-butylperoxy)-3,3,5-triméthylcyclohexane, 1,1-di(*tert*-butylperoxy)cyclohexane, le peroxy-2-éthylhexylcarbonate de *tert*-amyle, le peroxy-2-éthylhexylcarbonate de *tert*-butyle, le peroxy-3,5,5-triméthylhexanoate de *tert-*amyle, le peroxy-3,5,5-triméthylhexanoate de *tert*-butyle, le peroxyacétate de *tert*-amyle, le peroxyacétate de *tert*-butyle, le 2,2-di(*tert*-butylperoxy)butane, le 2,2-di(*tert-*amylperoxy)butane, le peroxybenzoate de *tert*-amyle, le peroxybenzoate de *tert*-butyle, le 4,4-di(*tert*-butylperoxy)valérate de butyle, le 2,5-diméthyl-2,5-di(*tert-*butylperoxy)hexane, le peroxyde de *tert*-butylcumyle, le peroxyde de di-*tert*-amyle, le peroxyde de di-*tert*-butyle, l'hydroperoxyde de 1,1,3,3-tétraméthylbutyle, l'hydroperoxyde de 3,5-diisopropylbenzène, l'hydroperoxyde de cumène et leurs mélanges.

Dans une variante avantageuse, l'initiateur de polymérisation est choisi parmi le 2,5-diméthyl-2,5-di(2-éthylhexanoylperoxy)hexane, le peroxy-2-éthylhexanoate de 1,1,3,3-tétraméthylbutyle, le peroxy-2-éthylhexanoate de *tert*-amyle, le peroxy-2-éthylhexanoate de *tert*-butyle, le peroxydiéthylacétate de *tert*-butyle, le peroxyisobutyrate de *tert*-butyle, le *tert*-amylperoxy-1-méthoxycyclohexane, le 1,1-di(*tert*-amylperoxy)cyclohexane, le 1,1-di(*tert*-butylperoxy)-3,3,5-triméthylcyclohexane, le 1,1-di(*tert*-butylperoxy)cyclohexane, le peroxy-2-éthylhexylcarbonate de *tert*-amyle, le peroxy-2-éthylhexylcarbonate de *tert*-butyle, le peroxy-3,5,5-triméthylhexanoate de *tert-*amyle, le peroxy-3,5,5-triméthylhexanoate de *tert*-butyle, le peroxyacétate de *tert*-amyle, le peroxyacétate de *tert*-butyle, le 2,2-di(*tert*-butylperoxy)butane, le 2,2-di(*tert-*amylperoxy)butane, le peroxybenzoate de *tert*-amyle, le peroxybenzoate de *tert*-butyle, le 4,4-di(*tert*-butylperoxy)valérate de butyle, le 2,5-diméthyl-2,5-di(*tert-*butylperoxy)hexane, le peroxyde de *tert*-butylcumyle, le peroxyde de di-*tert*-amyle, le peroxyde de di-*tert*-butyle, l'hydroperoxyde de 1,1,3,3-tétraméthylbutyle, l'hydroperoxyde de 3,5-diisopropylbenzène et l'hydroperoxyde de cumène.

Dans une variante préférentielle, l'initiateur de polymérisation est choisi parmi le 2,5-diméthyl-2,5-di(2-éthylhexanoylperoxy)hexane, le peroxy-2-éthylhexanoate de 1,1,3,3-tétraméthylbutyle, le peroxy-2-éthylhexanoate de *tert*-butyle, le peroxydiéthylacétate de *tert*-butyle, le *tert*-amylperoxy-1-méthoxycyclohexane, le 1,1-di(*tert*-amylperoxy)cyclohexane, le 1,1-di(*tert*-butylperoxy)-3,3,5-triméthylcyclohexane, le 1,1-di(*tert*-butylperoxy)cyclohexane, le peroxy-2-éthylhexylcarbonate de *tert*-amyle, le peroxy-2-éthylhexylcarbonate de *tert*-butyle, le peroxy-3,5,5-triméthylhexanoate de *tert-*amyle, le peroxy-3,5,5-triméthylhexanoate de *tert*-butyle, le peroxyacétate de *tert*-amyle, le peroxyacétate de *tert*-butyle, le 2,2-di(*tert*-butylperoxy)butane, le 2,2-di(*tert-*amylperoxy)butane, le peroxybenzoate de *tert*-amyle, le peroxybenzoate de *tert*-butyle, le 4,4-di(*tert*-butylperoxy)valérate de butyle, le 2,5-diméthyl-2,5-di(*tert-*butylperoxy)hexane, le peroxyde de *tert*-butylcumyle, le peroxyde de di-*tert*-amyle, le peroxyde de di-*tert*-butyle, l'hydroperoxyde de 1,1,3,3-tétraméthylbutyle et l'hydroperoxyde de 3,5-diisopropylbenzène.

La composition (méth)acrylique dont l'utilisation fait l'objet de la présente invention comprend de 0,01 partie en poids à 5 parties en poids d'initiateur de polymérisation.

Selon un mode de réalisation particulier, la composition (méth)acrylique comprend de 0,02 partie en poids à 4 parties en poids, avantageusement de 0,03 partie en poids à 3 parties en poids, d'initiateur de polymérisation pour 100 parties en poids du ou des monomères (méth)acryliques M1.

Ce qui vient d'être décrit pour un initiateur de polymérisation est tout à fait transposable à un système initiateur, un tel système consistant en un initiateur et un activateur.

La composition (méth)acrylique dont l'utilisation fait l'objet de la présente invention peut effectivement comprendre, en outre, un activateur de polymérisation.

Cet activateur de polymérisation peut notamment être choisi parmi les amines tertiaires, telles que la N,N-diméthyl-p-toluidine (DMPT) et la N,N-dihydroxyéthyl-p-toluidine (DHEPT), et les catalyseurs de métaux de transition qui sont solubles dans les solutions organiques.

Selon un mode de réalisation particulier, la composition (méth)acrylique comprend de 0,01 partie en poids à 1 partie en poids, avantageusement de 0,02 partie en poids à 0,7 partie en poids et, de préférence, de 0,03 partie en poids à 0,4 partie en poids ppm, d'activateur de polymérisation pour 100 parties en poids du ou des monomères (méth)acryliques M1.

Selon une variante avantageuse, la composition (méth)acrylique dont l'utilisation fait l'objet de la présente invention peut, en outre, comprendre un agent de couplage qui favorise la dispersion de la charge inorganique C dans le sirop (méth)acrylique liquide formé par le ou les polymères (méth)acryliques P1 et le ou les monomères (méth)acryliques M1.

Cet agent de couplage peut être formé par la charge inorganique C et/ou par un composé en tant que tel. L'agent de couplage peut être formé par un seul des composés qui viennent d'être cités ou par un mélange de deux ou plusieurs de ces composés.

Dans le cas où il est formé par la charge inorganique C, cet agent de couplage est formé par la charge C1 qui est alors fonctionnalisée.

Selon une version avantageuse, lorsque la charge C1 est formée par un oxyde métallique, l'agent de couplage peut être formé une silice silanisée, telle que celle commercialisée par la société Quarzwerke sous la dénomination Silbond®W 12 MST.

Dans le cas où il est formé par un composé en tant que tel, cet agent de couplage peut être un composé comprenant des groupements fonctionnels tel qu'un organosilane. Cet agent de couplage peut notamment être choisi parmi les aminosilanes, les vinylsilanes, les méthacrylsilanes et les mélanges de ceux-ci. De préférence, l'agent de couplage est choisi parmi les méthacrylsilanes.

La composition (méth)acrylique dont l'utilisation fait l'objet de la présente invention peut également comprendre, en outre, un ou plusieurs additifs tels que, par exemple, un agent limitateur de chaîne, un agent de transfert de chaîne (par exemple, le diméthyldioxirane), un agent d'ajustement de la vitesse de polymérisation du ou des monomères (méth)acryliques M1, un agent ignifugeant, un colorant et un pigment.

Dans le cadre de la présente invention, la composition (méth)acrylique peut être utilisée pour fabriquer un matériau diélectrique revêtu, ce matériau diélectrique revêtu comprenant un matériau diélectrique et au moins une couche de protection disposée sur ledit matériau diélectrique.

Selon l'invention, le matériau diélectrique est tel que défini ci-dessus, c'est-à-dire qu'il est obtenu à partir d'une composition (méth)acrylique conforme à ce qui vient d'être décrit, notamment pour ce qui concerne les caractéristiques relatives au(x) polymères (méth)acryliques P1 et au(x) monomères (méth)acryliques M1 formant le sirop (méth)acrylique, aux monomères (méth)acryliques M2 et M3, à la charge inorganique C, à l'initiateur de polymérisation et, le cas échéant, à l'activateur de polymérisation, à l'agent de couplage et/ou aux additifs, les caractéristiques avantageuses de cette composition (méth)acrylique pouvant être prises seules ou en combinaison. Ce matériau diélectrique est revêtu par au moins une couche de protection.

Le matériau diélectrique revêtu se caractérise non seulement par les propriétés mécaniques et diélectriques remarquables qui lui sont conférées par le matériau diélectrique mais également par les propriétés complémentaires qui lui sont conférées par la ou les couches de protection disposées sur le matériau diélectrique. Une ou de telles couches de protection peuvent notamment permettre de conférer et/ou de renforcer une isolation thermique, une isolation électrique, une protection contre les rayons UV, des propriétés ignifugeantes et/ou des propriétés barrières aux gaz et/ou à l'eau.

Dans une variante avantageuse de l'invention, la couche de protection est obtenue à partir d'une composition qui présente une bonne compatibilité avec la composition thermoplastique à partir de laquelle est obtenu le matériau diélectrique.

Cette couche de protection peut notamment être obtenue à partir d'une composition comprenant un polymère fluorocarboné, tel que le polyfluorure de vinylidène (PVDF) ou encore un polymère (méth)acrylique, de préférence un polymère (méth)acrylique.

Cette composition de la couche de protection peut également comprendre une charge inorganique ou, au contraire et de manière préférentielle, en être exempte.

Dans le cadre de la présente invention, la composition (méth)acrylique telle que décrite ci-dessus est moulée à chaud.

Plus particulièrement, le procédé de fabrication d'un matériau diélectrique à partir de cette composition (méth)acrylique comprend les étapes suivantes :
(1) le mélange des composés d'une composition (méth)acrylique telle que décrite ci-dessus, le sirop (méth)acrylique liquide étant préparé en premier et l'initiateur de polymérisation étant introduit en dernier dans le sirop (méth)acrylique liquide, et
(2) le moulage à chaud de la composition (méth)acrylique obtenue à l'issue de l'étape (1).

En d'autres termes, le procédé comprend :
(1) le mélange des composés suivants :
   (a) 100 parties en poids d'un sirop (méth)acrylique liquide comprenant :
      (a₁) de 10 % en poids à 50 % en poids d'un ou plusieurs polymères (méth)acryliques P1, et
      (a₂) de 50 % en poids à 90 % en poids d'un ou plusieurs monomères (méth)acryliques M1, chaque monomère M1 ne comprenant qu'une fonction (méth)acrylique par monomère,
   (b) de 100 parties en poids à 200 parties en poids d'une charge inorganique C, cette charge inorganique C comprenant au moins une charge C1 choisie parmi les oxydes métalliques, les carbonates, les silicates et le verre,
   (c) de 0,01 partie en poids à 5 parties en poids d'un monomère (méth)acrylique M2, le monomère M2 comprenant au moins deux fonctions (méth)acryliques par monomère,
   (d) de 0,01 partie en poids à 10 parties en poids d'un monomère (méth)acrylique M3, le monomère M3 étant :
      - soit un monomère (méth)acrylique M3₁ ne comprenant qu'une fonction (méth)acrylique par monomère, le monomère M3₁ étant différent du ou des monomères M1,
      - soit un monomère (méth)acrylique M3₂ comprenant au moins deux fonctions (méth)acryliques par monomère, le monomère M3₂ étant différent du monomère M2,
   (e) de 0,01 partie en poids à 5 parties en poids d'un initiateur de polymérisation choisi parmi les peroxydes organiques, et
   (f) optionnellement, un agent du couplage,
   le sirop (méth)acrylique liquide étant préparé en premier et l'initiateur de polymérisation étant introduit en dernier dans le sirop (méth)acrylique liquide, et
(2) le moulage à chaud de la composition obtenue à l'issue de l'étape (1).

Le procédé de fabrication est donc un procédé dont la mise en œuvre est particulièrement simple et qui ne requiert pas nécessairement d'étape complémentaire de post-cuisson, contrairement aux procédés actuels de fabrication de matériaux diélectriques à base de résines époxydes. Le procédé peut, en outre, être facilement mis en œuvre dans les installations actuellement dédiées à ces procédés actuels de fabrication.

Les caractéristiques décrites précédemment en liaison avec la composition (méth)acrylique et, notamment, les caractéristiques relatives au(x) polymères (méth)acryliques P1 et au(x) monomères (méth)acryliques M1 formant le sirop (méth)acrylique, aux monomères (méth)acryliques M2 et M3, à la charge inorganique C, à l'initiateur de polymérisation et, le cas échéant, à l'activateur de polymérisation, à l'agent de couplage et/ou aux additifs, sont bien entendu applicables au présent procédé de fabrication du matériau diélectrique.

L'étape (1) de préparation du procédé de fabrication est réalisée par mélange de l'ensemble des composés entrant dans la composition (méth)acrylique, en prenant le soin de préparer, en premier lieu, le sirop (méth)acrylique liquide puis d'introduire, dans ce sirop (méth)acrylique, les monomères (méth)acryliques M2 et M3 et, le cas échéant, l'activateur de polymérisation, l'agent de couplage et/ou les additifs, ainsi que la charge inorganique C, l'initiateur de polymérisation étant introduit en dernier lieu.

Ce mélange peut être manuel ou bien réalisé au moyen d'un mélangeur.

Dans une variante avantageuse, le mélange est effectué sous un léger vide de manière à éliminer les gaz de réaction, typiquement compris entre 100 mbar et 1 bar, avantageusement entre 500 mbar et 900 mbar et ce, pendant une durée comprise entre 5 min et 2 h, avantageusement entre 15 min et 1 h et, préférentiellement, entre 30 min et 1 h.

Dans une variante avantageuse, après l'étape de dégazage qui vient d'être décrite, on réalise une étape de balayage du mélange avec un gaz inerte, par exemple de l'azote.

Dans le cas où l'agent de couplage est formé par la charge inorganique C, la fonctionnalisation est réalisée préalablement à son introduction dans la composition (méth)acrylique.

L'étape (2) de moulage à chaud de la composition telle qu'obtenue à l'issue de l'étape (1) permet de réaliser la polymérisation de la matrice thermoplastique et, ce faisant, d'obtenir le matériau diélectrique.

Cette étape (2) de moulage à chaud peut être réalisée par toute technique de moulage classiquement utilisée dans le domaine des thermoplastiques.

De manière particulièrement avantageuse, cette étape (2) de moulage à chaud peut être mise en œuvre à une température inférieure ou égale à 80 °C.

L'étape (2) de moulage à chaud peut notamment être réalisée par moulage par injection, par moulage en coquille (ou coulée gravitaire), par moulage sous vide (ou couclée sous vide) ou par moulage basse pression (ou coulée basse pression).

Dans une variante avantageuse, le moulage par injection est réalisé au moyen du procédé de gélification sous pression automatique ou GPA (en anglais, Automatic Pressure Gelation ou APG en abrégé).

Pour être compatible avec une étape (2) de moulage par injection réalisée au moyen du procédé GPA, l'initiateur de polymérisation se présente sous une forme liquide dans la plage de températures allant de 0 °C à, par exemple, 50 °C et peut être plus particulièrement choisi parmi les peroxydes organiques mentionnés précédemment pour la composition (méth)acrylique, dans ses variantes avantageuse et préférentielle.

Dans le cadre de la présente invention, la composition (méth)acrylique peut être utilisée pour fabriquer un matériau diélectrique et un matériau diélectrique revêtu tels que définis ci-dessus pour des utilisations particulières.

Ces matériaux diélectriques, revêtus ou non, peuvent notamment être utilisés dans l'industrie électronique ainsi que dans l'industrie électrique, qu'elle soit de basse tension, de moyenne tension ou de haute tension.

Il est précisé que les expressions "basse tension", "moyenne tension" et "haute tension" sont utilisées dans leurs acceptations habituelles, à savoir:
- l'expression "basse tension" désigne une tension qui est strictement inférieure à 1 kV en courant alternatif et à 1,5 kV en courant continu,
- l'expression "moyenne tension" désigne une tension qui est supérieure ou égale à 1 kV en courant alternatif et à 1,5 kV en courant continu mais inférieure ou égale à 52 kV en courant alternatif et à 75 kV en courant continu, et
- l'expression "haute tension" désigne une tension qui est strictement supérieure à 52 kV en courant alternatif et à 75 kV en courant continu.

Dans l'industrie électrique, les matériaux peuvent notamment être utilisés comme matériau d'isolation électrique dans un appareil de coupure, de basse, moyenne ou haute tension, cet appareil de coupure pouvant avantageusement être un interrupteur, un disjoncteur, un combiné interrupteur-fusibles, un sectionneur, un sectionneur de mise à la terre, un transformateur et un contacteur.

D'autres caractéristiques et avantages de l'invention apparaîtront mieux à la lecture du complément de description qui suit, qui se rapporte à des exemples de préparation de matériaux diélectriques ainsi qu'à l'évaluation de propriétés mécaniques et diélectriques de ces matériaux, l'un étant un matériau diélectrique dit "conforme à l'invention" et l'autre étant un matériau diélectrique, dit "de référence", obtenu à partir de résine époxyde.

### EXPOSÉ DÉTAILLÉ DE MODES DE RÉALISATION PARTICULIERS

### 1. Préparation du matériau diélectrique conforme à l'invention

### 1.1. Composés mis en œuvre

Les composés mis en œuvre pour la préparation de la composition (méth)acrylique sont les suivants :
- comme polymère (méth)acrylique P1 : un PMMA formé par un copolymère de méthacrylate de méthyle et d'acrylate d'éthyle commercialisé par la Société Altuglas sous la dénomination Altuglas® BS 520,
- comme monomère (méth)acrylique M1 : un méthacrylate de méthyle stabilisé par de l'hydroquinone de monométhyléther,
- comme charge C1 : une silice broyée commercialisée par la Société Sibelco sous la dénomination E6,
- comme monomère (méth)acrylique M2 : un diméthacrylate de 1, 4-butanediol (BDDMA),
- comme monomère (méth)acrylique M3 : un diméthacrylate de triéthylène glycol (TEGDMA),
- comme initiateur de polymérisation : un hydroperoxyde de 3,5-diisopropylbenzène commercialisé par la Société Arkema sous la dénomination Luperox®DH,
- comme agent de couplage : BYK-C 8000 commercialisé par la Société BYK, et
- comme activateur : un dibutylphosphate de vanadium comprenant 5% massique en vanadium dans du propylène glycol commercialisé par la Société OMG borchers sous la dénomination Borchers®VP 0132.

### 1.2. Préparation du sirop (méth)acrylique liquide

Le sirop (méth)acrylique liquide est préparé par la dissolution de 20 parties en poids du polymère (méth)acrylique P1 dans 80 parties en poids du monomère (méth)acrylique M1.

### 1.3. Préparation de la composition (méth)acrylique

Aux 100 parties en poids du sirop (méth)acrylique liquide obtenu au chapitre **1.2.** ci-dessus, on ajoute :
- 163,2 parties en poids de silice (charge C1),
- 1 partie en poids de BDDMA (monomère (méth)acrylique M2),
- 1 partie en poids de TEGDMA (monomère (méth)acrylique M3₂),
- 0,3 parties en poids de l'agent de couplage (BYK-C 8000),
- 0,2 partie en poids de l'activateur (Borchers®VP 0132), et en dernier lieu,
- 2 parties en poids de l'initiateur de polymérisation (Luperox® DH).

L'ensemble des composés est mélangé pendant 3 h, à une température de l'ordre de 40 °C à 42 °C, pour l'obtention de la composition (méth)acrylique.

Après dégazage sous un vide de 900 mbar pendant 60 min, la composition (méth)acrylique est balayée avec de l'azote puis injectée dans un moule préchauffé à 60°C et présentant une empreinte compatible avec l'obtention d'éprouvettes du type 1B conformes à la norme ISO 527-1:2012.

### 1.4. Obtention du matériau diélectrique conforme à l'invention

On réalise la polymérisation de la composition (méth)acrylique en portant le moule à une température de 80 °C pendant 15 min.

Les éprouvettes du matériau diélectrique sont ensuite retirées du moule et placées dans un four à une température de 120 °C, pendant 4 h (post-cuisson réalisée en dehors du moule).

### 2. Préparation du matériau diélectrique de référence

### 2.1. Composés mis en œuvre

Les composés mis en œuvre pour la préparation de la formulation de résine époxyde, avec leurs proportions massiques respectives, sont les suivants :
- 100 parties en poids d'un précurseur formé par la résine de diglycidyléther du bisphénol A (DGEBA) commercialisée par la Société Huntsman Advanced Materials sous la dénomination Araldite®CY 225,
- 80 parties en poids d'un durcisseur formé par un anhydride méthyltétrahydrophtalique (MTHPA) commercialisé par la Société Huntsman Advanced Materials sous la dénomination Aradur®HY 925, et
- 270 parties en poids de la charge C1 : la silice broyée commercialisée par la Société Sibelco sous la dénomination E6.

### 2.2. Préparation de la formulation de résine époxyde

Dans un pot placé dans un malaxeur, on introduit le précurseur DGEBA, l'anhydride d'acide MTHPA et la charge de silice C1.

L'ensemble des composés est mélangé pendant 120 min, à une température comprise entre 50 °C et 67 °C pour l'obtention de la formulation de résine époxyde.

Cette formulation est ensuite injectée dans un moule préchauffé à 100 °C et présentant une empreinte compatible avec l'obtention d'éprouvettes du type 1B conformes à la norme ISO 527-1:2012.

### 2.3. Obtention du matériau diélectrique de référence

On réalise la polymérisation de la formulation de résine époxyde en portant le moule à une température de 100 °C pendant 1 h, puis à 130 °C pendant 16 h (post-cuisson réalisée dans le moule).

### 3. Évaluation des propriétés mécaniques des matériaux diélectriques

Les propriétés mécaniques ont été déterminées par des essais de traction conduits à 23 °C sur les éprouvettes telles qu'obtenues aux paragraphes **1.4.** et **2.3.** ci-dessus.

Ont ainsi été déterminés, conformément à la norme ISO 527-1:2012 :
- la contrainte à la rupture, en MPa,
- le module de Young, en MPa, et
- l'allongement à la rupture, en %.

Les résultats des essais de traction conduits à 23 °C figurent dans le Tableau 1 ci-dessous :

**Tableau 1**

| Matériau diélectrique | conforme à l'invention | de référence |
|---|---|---|
| Contrainte à la rupture (MPa) | 65,9 ± 4,7 | 58,03 ± 9,12 |
| Module de Young (MPa) | 8771,8 ± 327,96 | 9905 ± 207 |
| Allongement à la rupture (%) | 0,98 ± 0,1 | 0,68 ± 0,12 |

Les propriétés mécaniques ont été également évaluées par des essais de ténacité à la rupture conduits, à 23 °C, sur les éprouvettes telles qu'obtenues aux paragraphes **1.4.** et **2.3.** ci-dessus de manière à déterminer, conformément à la norme ISO 527-1:2012 :
- le facteur d'intensité de contrainte critique, noté K_{Ic}, en MPa.m^{1/2}, et
- le taux de restitution critique d'énergie, noté G_{Ic}, en J.m².

Les résultats des essais de ténacité à la rupture figurent dans le Tableau 2 ci-dessous :

**Tableau 2**

| Matériau diélectrique | conforme à l'invention | de référence |
|---|---|---|
| K_{Ic} (MPa.m^{1/2}) | 2,59 ± 0,13 | 2,35 ± 0,13 |
| G_{Ic} (J.m².) | 1052 ± 69,69 | 773,16 ± 78,98 |

Les résultats figurant dans les Tableaux 1 et 2 montrent que les éprouvettes réalisées dans le matériau diélectrique conforme à l'invention présentent des propriétés mécaniques qui sont pour le moins équivalentes, si ce n'est supérieures, à celles des éprouvettes réalisées dans le matériau diélectrique de référence.

### 4. Évaluation des propriétés diélectriques des matériaux diélectriques

Les éprouvettes telles qu'obtenues aux paragraphes **1.4.** et **2.3.** ci-dessus ont été soumises à des tests de caractérisation des matériaux isolants électriques pour déterminer :
- la permittivité relative, conformément à la norme CEI 62631-2-1 :2018,
- le facteur de dissipation (également désigné par la tangente Delta ou encore par la mesure de l'angle de perte), conformément à la norme CEI 62631-2-1 :2018, et
- la rigidité diélectrique, conformément à la norme CEI 60243-1 :2013.

Les résultats de permittivité relative et de facteur de dissipation sont rassemblés dans le Tableau 3 ci-après, étant précisé que les valeurs mentionnées correspondent à la moyenne des valeurs obtenues sur des lots de 3 éprouvettes soumises à des températures d'environnement de 25 °C, de 60 °C et de 90 °C :

**Tableau 3**

| Matériau diélectrique | Température (°C) | Permittivité relative | Facteur de dissipation |
|---|---|---|---|
| conforme à l'invention | 25 | 4,5 | 0,024 |
| | 60 | 4,7 | 0,035 |
| | 90 | 4,9 | 0,050 |
| de référence | 25 | 3,9 | 0,025 |
| | 60 | 4,1 | 0,03 |
| | 90 | 4,15 | 0,04 |

Le Tableau 3 montre que les valeurs de permittivité relative et de facteur de dissipation mesurées avec le matériau diélectrique conforme à l'invention sont comparables à celles mesurées avec le matériau diélectrique de référence qui met en œuvre une résine époxyde.

Les résultats des tests de rigidité diélectrique sont rassemblés dans le Tableau 4 ci-après, étant précisé que les valeurs mentionnées ont été obtenues sur des lots de 3 éprouvettes soumises à des températures d'environnement de 25 °C :

**Tableau 4**

| Matériau diélectrique | Rigidité diélectrique (kV/mm) |
|---|---|
| conforme à l'invention | 10,47 ± 0,87 |
| de référence | 11,62 ± 1,48 |

Le Tableau 4 met en évidence le fait que les valeurs de rigidité diélectrique mesurées avec le matériau diélectrique conforme à l'invention sont également du même ordre de grandeur que celles mesurées avec le matériau diélectrique de référence.

En d'autres termes, les propriétés diélectriques d'un matériau diélectrique conforme à l'invention, qui est obtenu à partir d'une composition (méth)acrylique dont l'utilisation fait l'objet de la présente invention, sont tout à fait comparables à celles d'un matériau diélectrique obtenu à partir d'une formulation de résine époxyde.

### BIBLIOGRAPHIE

[1] US 2006/0251906 A1 [2] EP 3296340 A1, [3] EP 3312226 A1

## Revendications

1. Utilisation d'une composition (méth)acrylique comprenant :
(a) 100 parties en poids d'un sirop (méth)acrylique liquide comprenant :
(a₁) de 10 % en poids à 50 % en poids d'un ou plusieurs polymères (méth)acryliques P1, et
(a₂) de 50 % en poids à 90 % en poids d'un ou plusieurs monomères (méth)acryliques M1, chaque monomère M1 ne comprenant qu'une fonction (méth)acrylique par monomère,
(b) de 100 parties en poids à 200 parties en poids d'une charge inorganique C, cette charge inorganique C comprenant au moins une charge C1 choisie parmi les oxydes métalliques, les carbonates, les silicates et le verre, de préférence choisie parmi les oxydes métalliques,
(c) de 0,01 partie en poids à 5 parties en poids d'un monomère (méth)acrylique M2, le monomère M2 comprenant au moins deux fonctions (méth)acryliques par monomère,
(d) de 0,01 partie en poids à 10 parties en poids d'un monomère (méth)acrylique M3, le monomère M3 étant :
. soit un monomère (méth)acrylique M3₁ ne comprenant qu'une fonction (méth)acrylique par monomère, le monomère M3₁ étant différent du ou des monomères M1,
. soit un monomère (méth)acrylique M3₂ comprenant au moins deux fonctions (méth)acryliques par monomère, le monomère M3₂ étant différent du monomère M2,
(e) de 0,01 partie en poids à 5 parties en poids d'un initiateur de polymérisation choisi parmi les peroxydes organiques, et
(f) optionnellement, un agent du couplage,
pour la fabrication d'un matériau diélectrique.

2. Utilisation selon la revendication 1, dans laquelle le ou chaque polymère (méth)acrylique P1 est choisi parmi un homopolymère de méthacrylate de méthyle et un copolymère de méthacrylate de méthyle, le méthacrylate de méthyle représentant avantageusement au moins 50 % en poids du ou de chaque polymère (méth)acrylique P1.

3. Utilisation selon la revendication 2, dans laquelle le ou chaque polymère (méth)acrylique P1 est un copolymère de méthacrylate de méthyle et d'acrylate d'alkyle dans lequel le groupe alkyle contient de 1 à 12 atomes de carbone, avantageusement de 1 à 6 atomes de carbone, le ou chaque polymère (méth)acrylique P1 étant préférentiellement choisi parmi un copolymère de méthacrylate de méthyle et d'acrylate de méthyle et un copolymère de méthacrylate de méthyle et d'acrylate d'éthyle.

4. Utilisation selon l'une quelconque des revendications 1 à 3, dans laquelle le ou chaque monomère (méth)acrylique M1 est choisi parmi l'acide acrylique, l'acide méthacrylique, les monomères acryliques d'alkyle, les monomères méthacryliques d'alkyle, le groupe alkyle de ces monomères (méth)acryliques pouvant être linéaire, ramifié ou cyclique, et contenant de 1 à 22 atomes de carbone, de préférence de 1 à 12 atomes de carbone, le monomère M1 étant, avantageusement, le méthacrylate de méthyle.

5. Utilisation selon la revendication 4, dans laquelle le méthacrylate de méthyle représente au moins 50 % en poids des monomères (méth)acryliques M1.

6. Utilisation selon l'une quelconque des revendications 1 à 5, dans laquelle la charge inorganique C comprend, en outre, du trihydrate d'aluminium C2 et/ou des renforts C3, ces renforts C3 pouvant être choisis parmi les tissus de verre, les fibres de verre et les billes de verre.

7. Utilisation selon l'une quelconque des revendications 1 à 6, dans laquelle le monomère (méth)acrylique M2 est choisi parmi le diméthacrylate d'éthylène glycol, le diméthacrylate de néopentylglycol, le diacrylate néopentylglycol, le diméthacrylate de 1,4-butanediol, le diacrylate de 1,4-butanediol, le diméthacrylate de 1,3-butylène glycol, le diacrylate de 1,3-butylène glycol, le diméthacrylate de triéthylène glycol et le diacrylate de triéthylène glycol.

8. Utilisation selon l'une quelconque des revendications 1 à 7 dans laquelle le monomère (méth)acrylique M3₁ est choisi parmi l'acrylate de cyclohexyle, le méthacrylate de cyclohexyle, l'acrylate d'iso-bornyle, le méthacrylate d'iso-bornyle, l'acrylate de *tert*-butylcyclohexyle, l'acrylate de 4-(1,1-diméthyéthyl)cyclohexyle et l'acrylate de 3,3,5 triméthylcyclohexyle.

9. Utilisation selon l'une quelconque des revendications 1 à 8, dans laquelle le monomère (méth)acrylique M3₂ est choisi parmi le diméthacrylate d'éthylène glycol, le diméthacrylate de néopentylglycol, le diacrylate néopentylglycol, le diméthacrylate de 1,4-butanediol, le diacrylate de 1,4-butanediol, le diméthacrylate de 1,3-butylène glycol, le diacrylate de 1,3-butylène glycol, le diméthacrylate de triéthylène glycol et le diacrylate de triéthylène glycol.

10. Utilisation selon l'une quelconque des revendications 1 à 9, dans laquelle la composition (méth)acrylique comprend, en outre, un agent de couplage, cet agent de couplage étant formé par un méthacrylsilane ou par la charge C1 qui est fonctionnalisée, la charge C1 fonctionnalisée étant avantageusement une silice silanisée.

11. Utilisation selon l'une quelconque des revendications 1 à 10, dans laquelle le matériau diélectrique est revêtu par au moins une couche de protection disposée sur ledit matériau diélectrique, la couche de protection étant avantageusement obtenue à partir d'une composition comprenant un polymère (méth)acrylique, éventuellement exempte de charge inorganique.

12. Utilisation selon l'une quelconque des revendications 1 à 11, dans laquelle la composition (méth)acrylique est moulée à chaud, le moulage à chaud étant avantageusement réalisé par moulage par injection, par moulage en coquille, par moulage sous vide ou par moulage basse pression.

13. Utilisation selon la revendication 12, dans laquelle le moulage par injection est réalisé au moyen du procédé de gélification sous pression automatique, l'initiateur de polymérisation étant sous une forme liquide.

14. Utilisation selon l'une quelconque des revendications 1 à 13 pour l'industrie électrique basse, moyenne ou haute tension.

15. Utilisation selon la revendication 14 pour un appareil de coupure basse, moyenne ou haute tension, tel qu'un interrupteur, un disjoncteur, un combiné interrupteur-fusibles, un sectionneur, un sectionneur de mise à la terre, un transformateur ou un contacteur.

## Patentansprüche

1. Verwendung einer (Meth)acryl-Zusammensetzung, welche umfasst:
(a) 100 Gewichtsteile eines flüssigen (Meth)acryl-Sirups, der umfasst:
(a₁) 10 Gewichts-% bis 50 Gewichts-% eines oder mehrerer (Meth)acryl-Polymere P1, und
(a₂) 50 Gewichts-% bis 90 Gewichts-% eines oder mehrerer (Meth)acryl-Monomere M1, wobei jedes Monomer nur eine (Meth)acryl-Funktion pro Monomer umfasst,
(b) 100 Gewichtsteile bis 200 Gewichtsteile eines anorganischen Füllstoffs C, wobei dieser anorganische Füllstoff C mindestens einen Füllstoff C1 umfasst, der aus Metalloxiden, Carbonaten, Silicaten und Glas ausgewählt, bevorzugt aus Metalloxiden ausgewählt ist,
(c) 0,01 Gewichtsteil bis 5 Gewichtsteile eines (Meth)acryl-Monomers M2, wobei das Monomer M2 mindestens zwei (Meth)acryl-Funktionen pro Monomer umfasst,
(d) 0,01 Gewichtsteil bis 10 Gewichtsteile eines (Meth)acryl-Monomers M3, wobei das Monomer M3 ist:
. entweder ein (Meth)acryl-Monomer M3₁, das nur eine (Meth)acryl-Funktion pro Monomer umfasst, wobei das Monomer M3₁ verschieden von dem oder den Monomeren M1 ist,
. oder ein (Meth)acryl-Monomer M3₂, das mindestens zwei (Meth)acryl-Funktionen pro Monomer umfasst, wobei das Monomer M3₂ verschieden von dem Monomer M2 ist,
(e) 0,01 Gewichtsteil bis 5 Gewichtsteile eines Polymerisationsinitiators, der aus organischen Peroxiden ausgewählt ist, und
(f) optional ein Kopplungsmittel,
zur Herstellung eines dielektrischen Materials.

2. Verwendung nach Anspruch 1, in welcher das oder jedes (Meth)acrylPolymer P1 aus einem Methylmethacrylat-Homopolymer und einem Methylmethacrylat-Copolymer ausgewählt ist, wobei das Methylmethacrylat vorteilhafterweise mindestens 50 Gewichtsprozent des oder jedes (Meth)acryl-Polymers P1 darstellt.

3. Verwendung nach Anspruch 2, in welcher das oder jedes (Meth)acrylPolymer P1 ein Copolymer von Methylmethacrylat und Alkylacrylat ist, in welchem die Alkylgruppe 1 bis 12 Kohlenstoffatome, vorteilhafterweise 1 bis 6 Kohlenstoffatome, enthält, wobei das oder jedes (Meth)acryl-Polymer P1 vorzugsweise aus einem Copolymer von Methylmethacrylat und Methylacrylat und einem Copolymer von Methylmethacrylat und Ethylacrylat ausgewählt ist.

4. Verwendung nach einem der Ansprüche 1 bis 3, in welcher das oder jedes (Meth)acryl-Monomer M1 aus Acrylsäure, Methacrylsäure, Alkyl-AcrylMonomeren und Alkyl-Methacryl-Monomeren ausgewählt ist, wobei die Alkylgruppe dieser (Meth)acryl-Monomere linear, verzweigt oder ringförmig sein kann und 1 bis 22 Kohlenstoffatome, bevorzugt 1 bis 12 Kohlenstoffatome, enthält, wobei das Monomer M1 vorteilhafterweise Methylmethacrylat ist.

5. Verwendung nach Anspruch 4, in welcher Methylmethacrylat mindestens 50 Gewichtsprozent der (Meth)acryl-Monomere M1 darstellt.

6. Verwendung nach einem der Ansprüche 1 bis 5, in welcher der anorganische Füllstoff C zudem Aluminiumtrihydrat C2 und/oder Verstärker C3 umfasst, wobei diese Verstärker C3 aus Glasgewebe, Glasfasern und Glaskugeln ausgewählt sein können.

7. Verwendung nach einem der Ansprüche 1 bis 6, in welcher das (Meth)acrylMonomer M2 aus Ethylenglykol-Dimethacrylat, Neopentylglykol-Dimethacrylat, Neopentylglykol-Diacrylat, 1,4-Butandiol-Dimethacrylat, 1,4-Butandiol-Diacrylat, 1,3-Butylenglykol-Dimethacrylat, 1,3-Butylenglykol-Diacrylat, Triethylenglykol-Dimethacrylat und Triethylenglykol-Diacrylat ausgewählt ist.

8. Verwendung nach einem der Ansprüche 1 bis 7, in welcher das (Meth)acrylMonomer M3₁ aus Cyclohexylacrylat, Cyclohexylmethacrylat, Isobornylacrylat, Isobornylmethacrylat, *tert*-Butylcyclohexylacrylat, 4-(1,1-Dimethylethyl)cyclohexylacrylat und 3,5,5-Trimethylcyclohexylacrylat ausgewählt ist.

9. Verwendung nach einem der Ansprüche 1 bis 8, in welcher das (Meth)acrylmonomer M3₂ aus Ethylenglykol-Dimethacrylat, Neopentylglykol-Dimethacrylat, Neopentylglykol-Diacrylat, 1,4-Butandiol-Dimethacrylat, 1,4-Butandiol-Diacrylat, 1,3-Butylenglykol-Dimethacrylat, 1,3-Butylenglykol-Diacrylat, Triethylenglykol-Dimethacrylat und Triethylenglykol-Diacrylat ausgewählt ist.

10. Verwendung nach einem der Ansprüche 1 bis 9, in welcher die (Meth)acryl-Zusammensetzung zudem ein Kopplungsmittel umfasst, wobei das Kopplungsmittel gebildet ist durch ein Methacrylsilan oder durch den Füllstoff C1, der funktionalisiert ist, wobei der funktionalisierte Füllstoff C1 vorteilhafterweise ein silanisiertes Siliciumdioxid ist.

11. Verwendung nach einem der Ansprüche 1 bis 10, in welcher das dielektrische Material mit mindestens einer auf dem dielektrischen Material angeordneten Schutzschicht überzogen wird, wobei die Schutzschicht vorteilhafterweise ausgehend von einer ein (Meth)acryl-Polymer umfassenden Zusammensetzung erhalten wird, die eventuell frei von anorganischem Füllstoff ist.

12. Verwendung nach einem der Ansprüche 1 bis 11, in welcher die (Meth)acryl-Zusammensetzung warmgeformt wird, wobei das Warmformen vorteilhafterweise durch Spritzgießen, Kokillengießen, Vakuumgießen oder Niederdruckgießen bewerkstelligt wird.

13. Verwendung nach Anspruch 12, in welcher das Spritzgießen mittels eines Gelbildungsverfahrens unter automatischem Druck bewerkstelligt wird, wobei der Polymerisationsinitiator in einer flüssigen Form ist.

14. Verwendung nach einem der Ansprüche 1 bis 13 für die Niederspannungs-, Mittelspannungs- oder Hochspannungs-Elektroindustrie.

15. Verwendung nach Anspruch 14 für ein Nieder-, Mittel- oder Hochspannungsschaltgerät, wie einen Schalter, einen Schutzschalter, eine Schalter-Sicherungs-Kombination, einen Trennschalter, einen Erdungsschalter, einen Transformator oder einen Schütz.

## Claims

1. Use of a (meth)acrylic composition comprising:
(a) 100 parts by weight of a liquid (meth)acrylic syrup comprising:
(a₁) from 10 % by weight to 50 % by weight of one or more (meth)acrylic polymers P1, and
(a₂) from 50 % by weight to 90 % by weight of one or more (meth)acrylic monomers M1, each monomer M1 only comprising one (meth)acrylic function per monomer,
(b) from 100 parts by weight to 200 parts by weight of an inorganic filler C, this inorganic filler C comprising at least one filler C1 selected from metal oxides, carbonates, silicates and glass, preferably selected from metal oxides,
(c) from 0.01 part by weight to 5 parts by weight of a (meth)acrylic monomer M2, the monomer M2 comprising at least two (meth)acrylic functions per monomer,
(d) from 0.01 part by weight to 10 parts by weight of a (meth)acrylic monomer M3, the monomer M3 being:
• either a (meth)acrylic monomer M3₁ only comprising one (meth)acrylic function per monomer, the monomer M3₁ being different from the monomer(s) M1,
• or a (meth)acrylic monomer M3₂ comprising at least two (meth)acrylic functions per monomer, the monomer M3₂ being different from the monomer M2,
(e) from 0.01 part by weight to 5 parts by weight of a polymerisation initiator selected from organic peroxides, and
(f) optionally, a coupling agent,
for manufacturing a dielectric material.

2. Use according to claim 1, wherein the or each (meth)acrylic polymer P1 is selected from a methyl methacrylate homopolymer and a methyl methacrylate copolymer, the methyl methacrylate advantageously accounting for at least 50 % by weight of the or each (meth)acrylic polymer P1.

3. Use according to claim 2, wherein the or each (meth)acrylic polymer P1 is a methyl methacrylate and alkyl acrylate copolymer in which the alkyl group contains from 1 to 12 carbon atoms, advantageously from 1 to 6 carbon atoms, the or each (meth)acrylic polymer P1 being preferentially selected from a methyl methacrylate and methyl acrylate copolymer and a methyl methacrylate and ethyl acrylate copolymer.

4. Use according to any of claims 1 to 3, wherein the or each (meth)acrylic monomer M1 is selected from acrylic acid, methacrylic acid, alkyl acrylic monomers, alkyl methacrylic monomers, wherein the alkyl group of these (meth)acrylic monomers may be linear, branched or cyclic, and containing from 1 to 22 carbon atoms, preferably from 1 to 12 carbon atoms, the monomer M1 being advantageously methyl methacrylate.

5. Use according to claim 4, wherein the methyl methacrylate accounts for at least 50 % by weight of the (meth)acrylic monomers M1.

6. Use according to any of claims 1 to 5, wherein the inorganic filler C further comprises aluminum trihydrate C₂ and/or reinforcements C3, wherein these reinforcements C3 may be selected from glass fabrics, glass fibres and glass beads.

7. Use according to any of claims 1 to 6, wherein the (meth)acrylic monomer M2 is selected from ethylene glycol dimethacrylate, neopentylglycol dimethacrylate, neopentylglycol diacrylate, 1,4-butanediol dimethacrylate, 1,4-butanediol diacrylate, 1,3-butylene glycol dimethacrylate, 1,3-butylene glycol diacrylate, triethylene glycol dimethacrylate and triethylene glycol diacrylate.

8. Use according to any of claims 1 to 7, wherein the (meth)acrylic monomer M3₁ is selected from cyclohexyl acrylate, cyclohexyl methacrylate, iso-bornyl acrylate, iso-bornyl methacrylate, tert-butylcyclohexyl acrylate, 4-(1,1-dimethyethyl)cyclohexyl acrylate and 3,3,5 trimethylcyclohexyl acrylate.

9. Use according to any of claims 1 to 8, wherein the (meth)acrylic monomer M3₂ is selected from ethylene glycol dimethacrylate, neopentylglycol dimethacrylate, neopentylglycol diacrylate, 1,4-butanediol dimethacrylate, 1,4-butanediol diacrylate, 1,3-butylene glycol dimethacrylate, 1,3-butylene glycol diacrylate, triethylene glycol dimethacrylate and triethylene glycol diacrylate.

10. Use according to any of claims 1 to 9, wherein the (meth)acrylic composition further comprises a coupling agent, this coupling agent being formed by a methacrylsilane or by the filler C1 which is functionalised, the functionalised filler C1 being advantageously a silanized silica.

11. Use according to any of claims 1 to 10, wherein the dielectric material is coated with at least one protective layer disposed on said dielectric material, the protective layer being advantageously obtained from a composition comprising a (meth)acrylic polymer, possibly free of an inorganic filler.

12. Use according to any of claims 1 to 11, wherein the (meth)acrylic composition is heat moulded, the heat moulding being advantageously performed by injection moulding, by shell moulding, by vacuum moulding or by low pressure moulding.

13. Use according to claim 12, wherein injection moulding is performed by means of the automatic pressurised gelling method, the polymerisation initiator being in a liquid form.

14. Use according to any of claims 1 to 13 for low, medium or high voltage industry.

15. Use according to claim 14 for a low, medium or high voltage cut-off device, such as a switch, circuit breaker, switch-fuses set, disconnector, earthing switch disconnector, transformer or contactor.
